# EUROPÄISCHE PATENTSCHRIFT

(11) **EP 0 714 723 B1**
(45) Veröffentlichungstag und Bekanntmachung des Hinweises auf die Patenterteilung: **11.08.1999**
(21) Anmeldenummer: 95115192.7
(22) Anmeldetag: 27.09.1995
(51) Int. Cl.: B23K 11/30

(54) **Verfahren zum Rollnahtschweissen sowie Rollenkopfhalterung an einer Widerstandsnahtschweissmaschine**
Roller seam welding method, roller head holding on a resistance welding maschine
Procédé de soudage par molettes, ainsi que le maintien de la tête ayant les dites molettes à une machine de soudage par résistance

(30) Priorität: 28.11.1994 CH 357694
(43) Veröffentlichungstag der Anmeldung: 05.06.1996
(73) Patentinhaber: ELPATRONIC AG, 8962 Bergdietikon (CH)
(72) Erfinder: Gantenbein, Rainer, CH-5432 Neuenhof (CH)

(56) Entgegenhaltungen:
- EP-A- 0 121 859
- DE-C- 375 176
- GB-A- 187 561
- US-A- 4 150 277
- US-A- 4 332 994

## Beschreibung

Die Erfindung betrifft ein Verfahren zum Rollnahtschweissen von Behältern, insbesondere Dosen, bei welchem der untere Rollenkopf der Widerstandsrollnahtschweissmaschine in Abständen nachbearbeitet und dadurch in seinem Durchmesser verkleinert wird. Ferner betrifft die Erfindung einen Schweissarm für eine Widerstandsrollnahtschweissmaschine, mit einer Halteanordnung für den Stator eines Rollenkopfes gemäss Oberbegriff des Anspruchs 2.

Beim bekannten Rollennahtschweissen von Dosenzargen erfolgt das Schweissen mittels eines oberen und unteren Rollenkopfes jeweils unter Verwendung einer Drahtzwischenelektrode. Ein solcher Rollenkopf ist z.B. aus EP-A-459 091 bekannt. Der untere Rollenkopf ist in einem Schweissarm der Schweissmaschine gehalten, der von den zugeführten Dosenzargen umgeben ist. Die Zuführung der Zarge in die Schweisszone erfolgt über eine sogenannte Z-Schiene zur Bildung der Nahtüberlappung und ein Kopfstück. Der untere Rollenkopf der Schweissmaschine wird periodisch nachbearbeitet, um dessen Verschleiss und Verschmutzung im Betrieb Rechnung zu tragen. Bei der Nachbearbeitung verringert sich der Durchmesser des Rollenkopfes. Um dies zu kompensieren ist es bekannt, das Kopfstück in der Höhe nachzustellen bzw. zu neigen. Es zeigt sich indes, dass durch diese Massnahme eine Verminderung der Schweissqualität eintreten kann.

Aus GB-A-187 561 ist es bekannt, den oberen Rollenkopf einer Rollnahtschweissmaschine mittels Gewindebolzen höhenverstellbar anzuordnen. US-A-4 332 994 zeigt ebenfalls die Einstellung der Vertikalposition einer Schweissrolle mittels einer Verstellschraube. US-A-4 150 277 zeigt die Höhenverstellung eines Rollenkopfes durch exzentrische Anordnung von dessen Lagerzapfen. Dadurch ergibt sich bei Vertikalverstellung auch eine Verstellung des Kontaktpunktes mit dem Schweissgut aus der Schweissebene heraus. Die Lösungen mit Schrauben sind anfällig für eine unbeabsichtigte Verstellung.

Der Erfindung liegt die Aufgabe zugrunde, das Verfahren so zu verbessern, dass eine konstante Schweissqualität erzielt wird und eine einfache, sich nicht ungewollt verstellende Einstellung des Rollenkopfes erzielt wird.

Dies wird bei dem Verfahren der eingangs genannten Art durch die kennzeichnenden Merkmale des Anspruchs 1 erreicht.

Es hat sich gezeigt, dass durch die vertikale Verstellung des Rollenkopfes anstelle der Neigung des Führungskopfes eine verbesserte Schweissqualität erzielt werden kann. Die Erklärung dafür liegt darin, dass durch die bisherige Neigung des Führungskopfes eine leicht schräge Zufuhr der Zarge erfolgt, was die Schweissebene verschiebt, wodurch Schweissparameter verändert werden können. Die vertikale Verstellung des Rollenkopfes auf die beanspruchte Weise ergibt eine einfache, sich nicht selbstverstellende Einstellung ohne Abweichung von der Schweissebene.

Der Erfindung liegt ferner die Aufgabe zugrunde, einen Schweissarm mit einer Halteanordnung für den Rollenkopfstator zu schaffen, mittels welcher die Schweissqualität verbessert werden kann.

Dies erfolgt bei dem Schweissarm der eingangs genannten Art mit den kennzeichnenden Merkmalen des Anspruchs 2.

Es wird die Vertikalverstellung durch auswechselbare Halteplatten mit definierter Höhe für den Stator bewirkt. Dadurch wird jegliche Feineinstellarbeit eliminiert. Weiter ist es bevorzugt, wenn die eine Halteplatte in einem vom Schweissarm lösbaren Deckel angeordnet ist, der ein seitliches Herausnehmen des Rollenkopfes erlaubt.

Im folgenden werden Ausführungsbeispiele der Erfindung anhand der Zeichnungen näher erläutert. Dabei zeigt
Figur 1 einen Teil des unteren Schweissarmes einer Rollnahtwiderstandsschweissmaschine in Seitenansicht;
Figur 2 eine teilweise geschnittene Draufsicht auf den Schweissarm von Figur 1;
Figur 3 eine Ansicht des am Schweissarm von Figur 1 und 2 angeordneten Deckels; und
Figur 4 ein Aufnahmestück für den Rollenkopfstator.

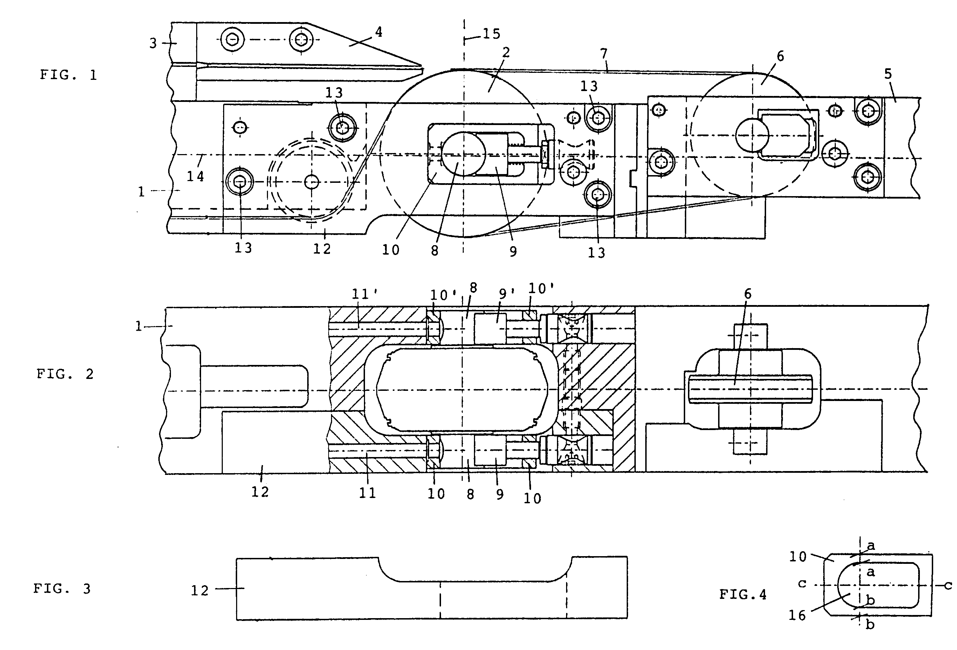

Figur 1 zeigt in Seitenansicht den unteren Schweissarm 1 einer an sich bekannten Widerstandsrollnahtschweissmaschine, welche ansonsten nicht dargestellt ist. An dem unteren Schweissarm 1 ist der untere Rollenkopf 2 angeordnet. Nicht dargestellt ist der obere Rollenkopf, welcher oberhalb des unteren Rollenkopfes 2 angeordnet ist, so dass auf bekannte Weise eine Dosenzarge mit Ueberlappungsnaht durch die Z-Schiene 3 und den Führungskopf 4 in die Schweisszone zwischen unterem und oberen Rollenkopf geführt wird. Die Schweissung erfolgt dann durch Beaufschlagung der Naht von aussen durch den oberen Rollenkopf und von innen durch den unteren Rollenkopf 2, wobei in beiden Fällen eine Drahtzwischenelektrode vorgesehen ist, welche beim unteren Rollenkopf 2 dargestellt und mit 7 bezeichnet ist. Im Beispiel von Figur 1 verläuft die Drahtelektrode 7 über eine Zusatzrolle 6. Diese kann indes auch nicht vorhanden sein, so dass die Drahtelektrode 7 den unteren Rollenkopf 2 umschlingt. An den soweit bekannten unteren Schweissarm 1 kann sich eine Einrichtung 5 zur Beschichtung der geschweissten Doseninnennaht anschliessen. Diese Einrichtung ist, da bekannt, hier nicht näher beschrieben.

Der untere Rollenkopf 2 kann z.B. ein Rollenkopf sein, wie er in EP-A-459 091 beschrieben ist. Der Rollenkopf weist dabei einen Stator 8 auf, der am unteren Schweissarm festgeklemmt ist. Dazu sind einstellbare Klemmbacken 9 vorgesehen, welche den Stator von einer Seite her beaufschlagen. Im gezeigten Beispiel ist nun der Stator 8 weiter in zwei Halteplatten bzw. Aufnahmestücken 10 und 10' (Figur 2) gehalten, welche die vertikale Position der Schweissrolle 2 bestimmen. Das Aufnahmestück 10 bzw. 10', welches in Figur 4 separat gezeigt ist, weist dazu eine Ausnehmung 16 auf, deren einer Wandungsteil der Form der Lagerzapfen des Stators 8 entspricht. Das Aufnahmestück 10 bzw. 10' ist seinerseits in einer Ausnehmung des Schweissarms 1 eingesetzt bzw. in einer Ausnehmung eines Deckels 12, der am Schweissarm mittels Gewindebolzen 13 lösbar befestigt ist. Die Lage der Ausnehmung im Aufnahmestück 10 ist so gewählt, dass sich ein gerader Verlauf der aus dem Führungsstück 4 austretenden Zarge in die Schweisszone zwischen oberer und unterer Schweissrolle ergibt, so dass die Schweissung in der zur Zeichnungsebene senkrecht stehenden Schweissebene 15 erfolgt. Wie bereits erwähnt, wird bei der gelegentlich notwendigen Nachbearbeitung der unteren Schweissrolle 2 deren Durchmesser reduziert. Dies wurde bis anhin durch eine leichte Neigung des Führungstücks 4 kompensiert. Gemäss der Erfindung wird nun aber anders vorgegangen, es wird nämlich die vertikale Position der unteren Schweissrolle verstellt. Im gezeigten Beispiel erfolgt dies durch Auswechslung der Aufnahmestücke 10 und 10', wobei die anstelle der bisherigen Aufnahmestücke 10 und 10' eingesetzten neuen Aufnahmestücke 10 und 10' eine entsprechend der Durchmesserverringerung nach oben hin versetzte Ausnehmung für die Zapfen des Stators 8 aufweisen, so dass die Schweissrolle nach oben hin versetzt angeordnet ist. Dadurch ergibt sich wiederum ein genau gerades Einführen der Zargen in die Schweisszone bzw. ein Schweissen genau in der Schweissebene 15, was zu der gleichbleibenden Schweissqualität trotz Nachbearbeitung des Rollenkopfes 2 führt.

Das Auswechseln der Aufnahmestücke 10 und 10' ist zusammen mit dem Aus- und Einbau des Rollenkopfes 2 dann besonders einfach, wenn der bereits genannte Deckel 12 am Schweissarm vorgesehen ist, der das eine Aufnahmestück 10 trägt und die eine Halterung für den Rollenkopf bildet. Dabei kann nämlich durch Lösen der Gewindebolzen 13 der Deckel entfernt werden, wodurch der Rollenkopf seitlich aus dem Schweissarm entnommen werden kann. Damit ist auch das hintere Aufnahmestück 10' zugänglich, welches gegen ein anderes Aufnahmestück 10' mit einer höheren Position der Ausnehmung ausgewechselt werden kann. Ebenso kann das vordere Aufnahmestück 10' im Deckel leicht ausgewechselt werden. Die Aufnahmestücke sind ferner mit einem in Längsrichtung verlaufenden Durchgang versehen, mittels dem die Kühlflüssigkeit durch die im Schweissarm befindlichen Kanäle 11 und 11' zu dem Rollenkopfstator 8 gelangt bzw. abgeführt wird, wie an sich bekannt ist.

Das in Figur 4 gezeigte Aufnahmestück 10 weist eine Ausnehmungswandung auf, welche an die Form des Statorzapfens angepasst ist. Die Distanz a-a bzw. die Distanz b-b des Aufnahmestücks ist genau definiert, so dass sich eine vorbestimmte Höhe des Rollenkopfes 2 ergibt. Bei einer Auswechslung des Aufnahmestücks kann zur Höhenverstellung des Rollenkopfes entweder ein neues Aufnahmestück 10 mit anders gewählten Distanzen a-a bzw. b-b eingesetzt werden, oder es kann ein weiteres Mal das Aufnahmestück 10 verwendet werden, wenn es um die Achse c-c gedreht wird, so dass die Strecke a-a unten liegt und die Strecke b-b oben liegt. Auf diese Weise können die Aufnahmestücke 10 für zwei verschiedene Rollenkopfpositionen verwendet werden, wenn die Distanzen a-a und b-b ungleich sind.

## Patentansprüche

1. Verfahren zum Rollnahtschweissen von Behältern, insbesondere Dosen, bei welchem der in einem Schweissarm angeordnete Rollenkopf (2) der Widerstandsrollnahtschweissmaschine in Abständen nachbearbeitet und dadurch in seinem Durchmesser verkleinert wird, dadurch gekennzeichnet, dass nach einer Nachbearbeitung der Rollenkopf in Vertikalrichtung gegenüber der Längsachse (14) des Schweissarmes (1) der Schweissmaschine verstellt wird, so dass die Durchmesserabnahme infolge der Bearbeitung kompensiert wird, wobei der Rollenkopf zur Nachbearbeitung aus einer Halterung im Schweissarm ausgebaut wird und nach der Bearbeitung unter Verwendung von Aufnahmestücken (10, 10') eingebaut wird, welche eine entsprechend der Durchmesserabnahme in Vertikalrichtung nach oben versetzte Ausnehmung für den Stator (8) des Rollenkopfes aufweisen, wodurch die Verschiebung der Einbaulage bewirkt wird.

2. Schweissarm für eine Widerstandsrollnahtschweissmaschine, mit einer Halteanordnung für den Stator (8) eines Rollenkopfes (2) welche Halteanordnung derart ausgestaltet ist, dass die Statorposition vertikal zur Schweissarmlängsachse (14) einstellbar ist, dadurch gekennzeichnet, dass die Halteanordnung durch im Schweissarm (1) angeordnete auswechselbare Aufnahmestücke (10, 10') für den Stator (8) gebildet ist, welche Aufnahmestücke Halteplatten mit Ausnehmungen für den Stator sind, die eine definierte Höhenlage des Stators im Schweissarm bewirken, so dass sich eine Einstellbarkeit in Stufen ergibt.

3. Schweissarm nach Anspruch 2, dadurch gekennzeichnet, dass ein Aufnahmestück (10') in einem festen Schweissarmabschnitt angeordnet ist und dass ein zweites Aufnahmestück (10) an einem vom festen Schweissarmabschnitt lösbaren Deckel (12) angeordnet ist.

## Claims

1. Process for the roller seam welding of containers, in particular cans, in which the electrode wheel head (2) of the resistance seam welding machine, which is arranged in a welding arm, is periodically remachined and its diameter is thereby reduced, characterized in that, after remachining, the electrode wheel head is vertically repositioned with respect to the longitudinal axis (14) of the welding arm (1) of the welding machine to compensate for the reduction in diameter due to remachining, the electrode wheel head being removed from a mounting in the welding arm for remachining, and refitted, after remachining, with retaining pieces (10, 10') which have a recess for the stator (8) of the electrode wheel head which is vertically upwardly offset by an amount corresponding to the reduction in diameter, thus effecting a shift in its position when fitted.

2. Welding arm for a resistance seam welding machine with a mounting arrangement for the stator (8) of an electrode wheel head (2), the said mounting arrangement being constructed so that the stator position is vertically adjustable with respect to the longitudinal axis (14) of the welding arm, characterized in that the mounting arrangement is formed by replaceable retaining pieces (10, 10') for the stator (8) arranged in the welding arm (1), the said retaining pieces been mounting plates with recesses for the stator which establish a defined vertical position of the stator in the welding arm, so as to provide a stepwise adjustment facility.

3. Welding arm according to Claim 2, characterized in that one retaining piece (10') is arranged in a fixed portion of the welding arm and in that a second retaining piece (10) is arranged in a cover (12) which is detachable from the fixed portion of the welding arm.

## Revendications

1. Procédé de soudage à la molette de récipients, notamment de boîtes métalliques, selon lequel la tête (2) de soudage à molette, disposée dans un bras de soudage, de la machine à souder par résistance est périodiquement rectifiée, de sorte que son diamètre est diminué, **caractérisé** en ce que, à la suite d'une rectification, la tête de soudage à molette est déplacée en direction verticale par rapport à l'axe longitudinal (14) du bras de soudage (1) de la machine à souder, compensant ainsi la diminution de diamètre consécutive à l'usinage, la tête de soudage à molette étant, pour la rectification, démontée d'un dispositif de maintien dans le bras de soudage, et étant, après la rectification, remontée en utilisant des éléments récepteurs (10, 10') qui comportent un évidement pour le stator (8) de la tête de soudage à molette qui est décalé verticalement vers le haut conformément à la diminution de diamètre, produisant ainsi le déplacement de la position de montage.

2. Bras de soudage pour une machine à souder par résistance à la molette, pourvu d'un dispositif de maintien pour le stator (8) d'une tête (2) de soudage à molette, ce dispositif de maintien étant conçu de telle sorte que la position du stator verticalement à l'axe longitudinal (14) du bras de soudage est réglable, **caractérisé** en ce que le dispositif de maintien est formé par des éléments récepteurs (10, 10') remplaçables pour le stator (8), disposés dans le bras de soudage (1), éléments qui sont des plaques de maintien pourvues d'évidements pour le stator, qui produisent une position définie en hauteur du stator dans le bras de soudage, fournissant ainsi une possibilité de réglage graduel.

3. Bras de soudage selon la revendication 2, **caractérisé** en ce qu'un élément récepteur (10') est disposé dans une partie fixe du bras de soudage, et en ce qu'un deuxième élément récepteur (10) est disposé sur un couvercle (12) détachable de la partie fixe du bras de soudage.
